(19) Europäisches Patentamt
European Patent Office
Office européen des brevets

(11) **EP 2 474 873 A1**

(12) **EUROPÄISCHE PATENTANMELDUNG**

(43) Veröffentlichungstag:
**11.07.2012  Patentblatt 2012/28**

(51) Int Cl.:
*G05B 11/42* (2006.01)    *G05B 13/02* (2006.01)

(21) Anmeldenummer: **11150659.8**

(22) Anmeldetag: **11.01.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **SIEMENS AKTIENGESELLSCHAFT**
**80333 München (DE)**

(72) Erfinder:
• **Bruneau, Thierry**
**1325, Corroy-le-Grand (BE)**
• **Wendelberger, Klaus**
**68789, St. Leon-Rot (DE)**

(54) **Verfahren und Vorrichtung zur Filterung eines Signals und Regeleinrichtung für einen Prozess**

(57)    Bei einem erfindungsgemäßen Verfahren und einer entsprechenden Vorrichtung zur Filterung eines Signals, wird ein verrauschtes Eingangssignal kontinuierlich dahingehend überprüft wird, ob es sich innerhalb oder außerhalb eines Totbandes befindet. Die Totbandbreite und der Nullpunkt des Totbandes werden dabei kontinuierlich in Abhängigkeit des zeitlichen Verhaltens des Eingangssignals und einer vorgegebenen Systemzeitkonstante an die Rauschleistung des Eingangssignals angepasst und es wird kontinuierlich zumindest ein gefiltertes Ausgangssignal ausgegeben wird, welches einem Totbandsignal, welches im Wesentlichen einem geglätteten Eingangssignal entspricht. Es wird ferner eine Reglereinrichtung angegeben, welche eine erfindungsgemäße Signalfilterung umfasst.

FIG 1

| IDENT SIGNAL | DÉNOMINATION | LIMITE INF | LIMITE SUP | CURSEUR 1 | CURSEUR 2 | UNITÉ | CENTER |
|---|---|---|---|---|---|---|---|
| Test Opti I I Input | Input signal | 40,0000 | 60,0000 | | | | 51,9025 |
| Test Opti I I UL DB ACT | Actual upper limit DB | 40,0000 | 60,0000 | | | | 52,0926 |
| Test Opti I I LL DB ACT | Actual lower limit DB | 40,0000 | 60,0000 | | | | 47,9785 |
| Test Opti I I OUT | Filtered signal | 40,0000 | 60,0000 | | | | 50,4907 |
| Test Opti I I DB | Actual deep band | 0,0000 | 10,0000 | | | | 2,0571 |
| Test Opti I I OUT DB | Filtered signal w/o annulment | 40,0000 | 60,0000 | | | | 50,0355 |

EP 2 474 873 A1

**Beschreibung**

Die Erfindung betrifft ein Verfahren und eine entsprechende Vorrichtung zur Filterung eines Signals, bei dem ein verrauschtes Eingangssignal kontinuierlich dahingehend überprüft wird, ob es sich innerhalb oder außerhalb eines Totbandes befindet. Die Erfindung betrifft weiterhin eine Regeleinrichtung für einen Prozess.

Zur Automatisierung von verfahrenstechnischen Prozessen werden Regelungsstrukturen eingesetzt. Ein Regelkreis setzt sich dabei zusammen aus

- der messtechnischen Erfassung des Istwerts der zu regelnden Prozessgröße (Regelgröße),
- der Vorgabe eines Sollwerts für diese Prozessgröße (Führungsgröße),
- der Regeldifferenzbildung (Abweichung der Regelgröße vom vorgegebenen Sollwert),
- dem Regelalgorithmus (Regler), der aus der Regeldifferenz bestimmt, wie das Stellorgan (z.B. Ventil, Klappe, Motor,...) zu verfahren ist, damit sich die Regelgröße der Führungsgröße nähert,
- der Ausgabe des Stellsignals an den Antrieb oder Aktor.

Demnach soll die Regelgröße einer Komponente einer technischen Anlage mittels des Reglers möglichst gut auf einem Sollwert für die Regelgröße gehalten werden. Ein Problem bei Regelungsvorgängen stellt im Allgemeinen das Rauschen der Regelgröße dar, dessen Ursache in der messtechnischen Erfassung der Regelgröße, einem durch Störeinflüsse hervorgerufenen Prozessrauschen o. ä. liegen kann.

Unerwünschte Schwingungen des Istwertes der Regelgröße können beispielsweise mit einem Verfahren vermieden werden, welches aus der EP 1 490 735 B1 bekannt ist. Während des Betriebs einer technischen Anlage wird laufend der Istwert der Regelgröße bestimmt und der Verstärkungsfaktor eines PI-Reglers in Abhängigkeit vom zeitlichen Verhalten des Istwerts verändert, solange bis der Istwert innerhalb eines vorgegebenen Toleranzbandes bezüglich des Sollwerts verbleibt. Wenn nun im Verlauf des Betriebs die geregelte Komponente einer Veränderung bezüglich ihres dynamischen Verhaltens unterliegt, beispielsweise verursacht durch Materialverschleiß und/oder Ablagerung von Betriebs- oder Hilfsstoffen der Komponente, oder durch Alterung von Teilen der Komponente, so wird der Verstärkungsfaktor erst dann wieder verändert, wenn der Istwert der Regelgröße sich wertmäßig vom Toleranzband entfernt. Diese erneute laufende Veränderung des Verstärkungsfaktors geschieht wieder nur so lange, bis der Istwert wieder ins Toleranzband eintaucht und dort verbleibt.

Das Rauschen der Regelgröße führt zu einem entsprechenden Rauschen der Regeldifferenz und damit zu einer ständigen Anregung des Reglers. Dieser wird dann das Stellorgan dazu veranlassen, ständig kleine Stellbewegungen auszuführen. Das Rauschen kann durch diese Stellbewegung jedoch nicht beseitigt werden, es wird ggf. sogar noch verstärkt. Der Antrieb selbst wird durch die ständigen, unnötigen Hin- und Herbewegungen stark belastet, der Verschleiß ist entsprechend groß.

Aus diesem Grunde muss in der Regelungstechnik der Signalverlauf für die Regelgröße bzw. für die Regeldifferenz gefiltert werden. Am Ausgang des Filters muss ein Signal erzeugt werden, das den Verlauf des ursprünglichen Signals im Wesentlichen wiedergibt aber die schnellen, kleinen Signaländerungen nicht beinhaltet.

Den Bereich der Signalfilterung betreffend existiert in der Literatur eine Vielzahl von Verfahren beispielsweise zur adaptiven Filterung. Häufig werden ausgefeilte, mathematische Verfahren beschrieben, mit deren Hilfe verrauschte Signale geglättet werden können, ohne die Nutzinformation, die in einem Signal steckt, zu verfälschen. In der Masse der Kraftwerksregelkreise im Zusammenhang mit der Filterung einer Regeldifferenz werden derart hohe Ansprüche jedoch nicht gestellt.

Eine einfache Methode eine solche Filterung am Eingang eines Reglers zu realisieren, ist die Verwendung eines Totbandes, was in der Kraftwerkstechnik üblicherweise zur Signalfilterung ausreicht. Dort wo höherwertige Filteralgorithmen benötigt werden, werden diese zusätzlich eingebaut.

Als Totband wird folgende Funktion f(x) definiert:

$$f(x) = x - T_B \quad \text{für} \quad x > a$$

$$f(x) = x + T_B \quad \text{für} \quad x < a$$

Dies bedeutet (für a=0), dass bei einem Eingangssignal x, welches innerhalb der Totbandbreite oder dem Intervall $[-T_B, T_B]$ liegt der Wert 0 als Ausgangssignal ausgegeben wird. Außerhalb dieses Bereiches wird der Wert des Eingangssignals verringert oder erhöht um die halbe Totbandbreite ausgegeben. Es kann auch ein entsprechendes Offset wie hier durch die Konstante a ausgedrückt, vorhanden sein. Mit einer solchen Totbandfunktion können demnach Signale geglättet werden, die um den Wert 0 schwanken. Als Erweiterung der Totbandfunktion können auch Signale gefiltert werden, welche um Werte ungleich Null (z.B. hier a) schwanken.

In Leitsystemen sind Reglerbausteine meist standardmäßig mit derartigen Totbandfunktionen ausgerüstet. Die Regeldifferenz, die aufgrund der Tatsache, dass die Regelgröße auf ihren Sollwert geregelt wird, um den Wert Null schwankt, wird dann auf das Totband geschaltet. Verändert sich die Regeldifferenz nur innerhalb des eingestellten Totbandes, wird am Ausgang des Filters definitionsgemäß stets der Wert Null anstehen und der Regler wird somit nicht angeregt. Nur größere Änderungen der Regeldifferenz kommen durch. Der Einfluss des Rauschens ist somit beseitigt.

Die Problematik besteht nun darin, dass die Breite des Totbandes für jeden Regelkreis individuell eingestellt werden muss. Ist das Totband zu klein, kommt immer noch ein Teil des Rauschens durch. Ist es zu groß, reagiert der Regler zu spät auf tatsächlich auftretende Regeldifferenzen. Das Regelgrößen-Signal muss daher untersucht und die Breite des Rauschens bestimmt werden, um das Totband richtig einstellen zu können. In einem Kraftwerksprozess beispielsweise gibt es ca. 200 - 300 Regler. Die Einstellung aller Totbänder ist daher ein sehr aufwändiger Vorgang. Dies gilt insbesondere wenn man berücksichtigt, dass die Rauschbreite variieren kann z. B. als Funktion des aktuellen Arbeitspunktes der Anlage, über die Zeit durch Veränderung der äußeren Störeinflüsse oder durch Verschleißerscheinungen o. ä. Die Einstellwerte für die Totbänder müssen daher unter Umständen mehrfach nachjustiert werden. Dies ist sehr mühsam, da die Einstellung der Totbänder in der Kraftwerksregelung heutzutage von Hand durch einen Ingenieur im Rahmen der verfahrenstechnischen Inbetriebnahme und Optimierung erfolgt.

Es ist daher die Aufgabe der vorliegenden Erfindung, ein Verfahren und eine entsprechende Vorrichtung zur Signalfilterung mithilfe eines Totbands anzugeben, welches eine vollautomatische Anpassung des Totbands im laufenden Betrieb erlaubt, wobei nach der Signalfilterung ein Signal vorliegen soll, welches den Verlauf des ursprünglichen Signals im Wesentlichen wiedergibt aber die schnellen, kleinen Signaländerungen nicht beinhaltet. Ferner soll eine verbesserte Regeleinrichtung angegeben werden, mittels welcher die beschriebenen Nachteile aus dem Stand der Technik überwunden werden.

Die Aufgabe wird erfindungsgemäß gelöst durch ein Verfahren und eine entsprechende Vorrichtung, bei dem/der ein verrauschtes Eingangssignal ständig dahingehend überprüft wird, ob es sich innerhalb oder außerhalb eines Totbandes befindet. Dabei ist im Gegensatz zum Stand der Technik die Totbandbreite nicht fest vorgegeben oder vorab eingestellt, sondern wird im laufenden Betrieb in Abhängigkeit des zeitlichen Verhaltens des Eingangssignals und einer gewählten Systemzeitkonstante verändert. Außerdem wird mittels des erfindungsgemäßen Algorithmus auch der Nullpunkt der Totbandfunktion verändert und somit eingestellt. Auf diese Weise wird eine automatische Online-Adaption der Totbandbreite und des "Offsets" (des Nullpunkts der Totbandfunktion) erreicht. Es handelt sich dabei vorteilhaft um einen selbstlernenden Algorithmus, der beispielsweise in einer technischen Anlage - einmal angestoßen - stets mitläuft. Das gefilterte Ausgangssignal, welches im Wesentlichen dem geglätteten Eingangssignal entspricht, wird ebenso online ausgegeben. Das Ausgangssignal gibt wunschgemäß den Verlauf des ursprünglichen Signals im Wesentlichen wieder, beinhaltet aber die schnellen, kleinen Signaländerungen nicht.

In einer vorteilhaften Ausgestaltung der Erfindung wird die Totbandbreite um einen Faktor vergrößert, wenn das Eingangssignal innerhalb einer ersten, bevorzugt kurzen, Zeitdauer eine bestimmte Anzahl n mal durch das Totband hindurchgegangen ist. Im Gegensatz zum Patent EP 1490735, wo eine Änderung des zu adaptierenden Parameters (dort der Verstärkungsfaktor eines Reglers) um einen Faktor dann ausgelöst wird, wenn die überwachte Größe (dort Istwert) einmal durch das Totband durchgeht, ist es hier vorteilhaft möglich, die Anzahl n der Totbanddurchgänge vorzugeben. Erst wenn die überwachte Größe (hier das Eingangssignal) mindestens n Mal durch das Totband hindurchgegangen ist, wird die Parameteränderung (hier die Anpassung der Totbandbreite) durchgeführt. Man erhält auf diese Weise mehr Flexibilität bezüglich der Einstellung der Totbandbreite. Über die Anzahl n der Totbanddurchgänge kann besonders vorteilhaft die adaptive Filterung beeinflusst werden.

In einer weiteren vorteilhaften Ausgestaltung der Erfindung wird die Totbandbreite kontinuierlich über die Zeit verkleinert, wenn sich das Eingangssignal während einer zweiten, bevorzugt langen, Zeitdauer innerhalb eines Innenbereichs des Totbandes befindet und dort verweilt.

Besonders vorteilhaft ist es, wenn neben einem ersten gefilterten Ausgangssignal wie beispielsweise einem Totbandsignal, ein zweites gefiltertes Ausgangssignal wie zum Beispiel ein um den Mittelwert des Rauschens korrigiertes Totbandsignal ausgegeben wird. Dadurch erhält der Benutzer Zusatzinformationen, die beim Betrieb einer technischen Anlage von Vorteil sein können. Die Ausgabe weiterer Ausgangssignale wie beispielsweise eines Maximalwertes, der gerade noch innerhalb des Totbandes liegt, oder eines entsprechenden Minimalwertes sind ebenfalls denkbar und zeigt die Leistungsfähigkeit des erfindungsgemäßen Algorithmus.

Vorteilhaft wird die Zählung der Totbanddurchgänge auf Null zurückgesetzt, wenn die Zeitspanne zwischen einem Maximum und Minimum des Eingangssignals größer als eine vorgegebene maximale halbe Periodendauer ist. Auf diese Weise wird vorteilhaft Rauschen von "echter" Signalbewegung unterschieden.

Eine besonders vorteilhafte Einsatzmöglichkeit des erfindungsgemäßen Verfahrens besteht in der Regelungstechnik. Eine Regeleinrichtung, welche eine Vorrichtung zur Filterung eines Signals mithilfe eines adaptiven Totbandes im laufenden Betrieb umfasst, erhöht in einer technischen Anlage die Qualität der Regelung und damit auch den der Anlage zu Grunde liegenden Prozess. Nicht nur im Kraftwerksbereich besteht der Trend zur vollautomatischen Adaption von Regelungen der einzelnen Komponenten. Die Regelungseinrichtung mit adaptiver, vollautomatischer Signalfilterung im laufenden Betrieb einer Anlage ist universell einsetzbar und ist dazu geeignet, optimale und anlagenschonende Regelungsergebnisse zu erzielen.

In einer weiteren vorteilhaften Ausgestaltung der Erfindung besteht die Regeleinrichtung aus einer Vorrichtung zur adaptiven Signalfilterung gemäß der Erfindung und einem nachgeschalteten PI-Regler mit adaptiv einstellbarem Verstärkungsfaktor. Bei dieser Ausführungsform sollen insbesondere Schwingungen des Eingangssignals vermieden und der Regler so eingestellt werden, dass eine optimale Regelgüte erzielt wird, d.h. dass die Regelgröße ihrem Sollwert möglichst genau folgt. Durch die Kombination beider Bausteine ergeben sich vielfache Vorteile: Es entstehen weniger Kosten, dadurch, dass Arbeiten, welche vorher händisch ausgeführt wurden, nun automatisch ablaufen. Die Regelungen zeigen weniger Verschleiß und werden über die Zeit nicht schlechter. Eine Anlage, welche die oben genannten Regelbausteine enthält, kann schneller optimiert werden und ist damit auch wieder schneller verfügbar.

Die Erfindung wird nachfolgend anhand von in den Zeichnungen dargestellten Ausführungsbeispielen näher erläutert.

Es zeigen:

FIG 1   eine graphische Darstellung eines beispielhaften Verlaufs des Eingangssignals, wobei ebenfalls der Verlauf des Totbands und der Verlauf der beiden Ausgangssignale eingezeichnet sind,

FIG 2   einen weiteren in seiner Skala vergrößerten beispielhaften zeitlichen Verlauf des Eingangssignals, und

FIG 3   eine Regeleinrichtung, welche eine Vorrichtung zur Filterung gemäß der vorliegenden Erfindung umfasst.

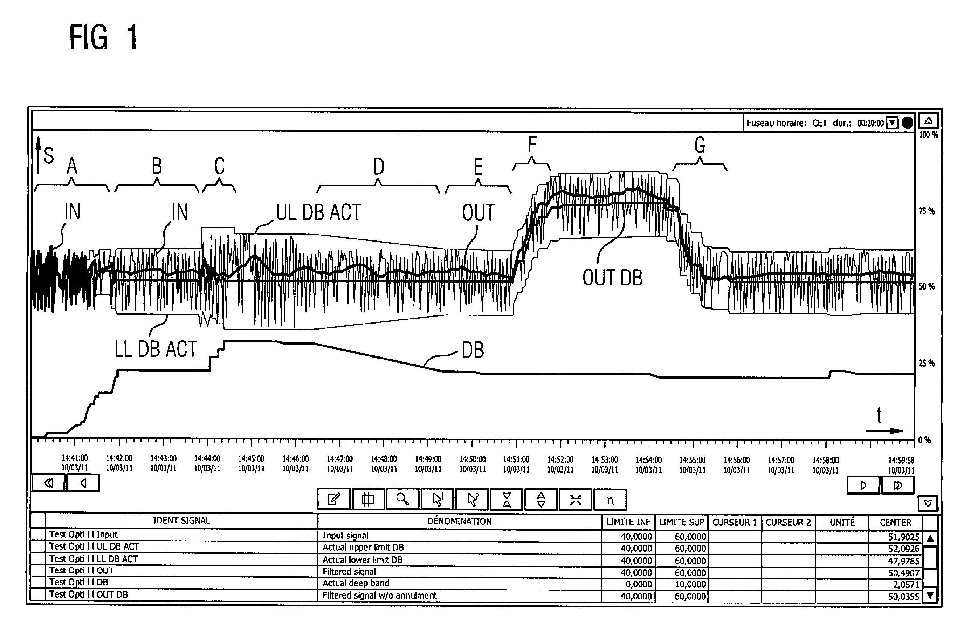

FIG 1 beinhaltet einen Computerausdruck einer Bildschirmanzeige eines Leitsystems, in welchem das erfindungsgemäße Verfahren implementiert ist. Im oberen Teil der Fig. 1 ist eine graphische Darstellung von Signalverläufen zu sehen, der untere Teil umfasst eine Tabelle mit weiteren Angaben zu den dargestellten Signalverläufen. Hier sind die Bezeichnungen und Beschreibungen der dargestellten Signale, sowie deren Werte und Grenzen verzeichnet.

Die Beschreibung des Ausführungsbeispiels bezieht sich im Wesentlichen auf die im oberen Bildausschnitt dargestellten Signalverläufe, wobei auf der Abszisse die Zeit t (hier als Uhrzeit in Minutenintervallen) und auf der Ordinate die Signalverläufe S aufgetragen sind. Das Eingangssignal IN weist ein hochfrequentes Rauschen auf. Es kann sich dabei um ein beliebiges Prozesssignal, eine Regeldifferenz oder den reinen Istwert eines Messsignals handeln.

Im Rahmen des erfindungsgemäßen Filteralgorithmus wird nun kontinuierlich (online) im laufenden Betrieb einer Anlage ausgehend vom verrauschten Eingangssignal IN und anderen vorgegebenen oder vorgebbaren Werten zumindest ein gefiltertes Ausgangssignal berechnet, sofort ausgegeben und dargestellt.

Für die Totbandbreite DB wird beispielsweise der Startwert Null vorgegeben. Alternativ wäre auch ein Startwert größer Null möglich. Dann wird der Lernalgorithmus freigegeben. Dann dauert es eine Weile bis der Algorithmus soweit gelernt hat, bis das Rauschen weg ist (siehe Bereich A in Fig. 1). Gemäß der vorliegenden Erfindung wird die Totbandbreite adaptiv an den Signalverlauf angepasst, d.h. die Totbandbreite wird kontinuierlich in Abhängigkeit des zeitlichen Verhaltens des Eingangssignals IN verändert. Unmittelbar über der Abszisse ist jeweils der aktuelle Gesamtwert DB des Totbands aufgetragen.

Das Totband kann beispielsweise symmetrisch um den Mittelwert der Minima und Maxima der Amplitude des Eingangssignals angeordnet sein und ähnlich einer Einhüllenden unmittelbar in der Nähe der Minima und Maxima der Amplitude des Eingangssignals verlaufen. Die oberen Grenzwerte des Totbands werden mit UL DB bezeichnet, ein jeweils aktueller Wert heißt UL DB ACT. Die unteren Grenzwerte des Totbands werden mit LL DB bezeichnet, ein jeweils aktueller Wert heißt LL DB ACT.

Sobald eine Totbandbreite DB festgelegt ist, wird überprüft, ob das Eingangssignal innerhalb oder außerhalb des Totbandes mit seiner aktuellen Breite liegt (Bereich B von Fig. 1). Liegt der Wert innerhalb der aktuellen Totbandbreite wird als Ausgangssignal beispielsweise ein Mittelwert der vorangegangenen Schwingungsamplituden ausgegeben. In dem in Fig. 1 dargestellten Ausführungsbeispiel handelt es sich bei dem Ausgangssignal OUT DB um das Ausgangssignal des Totbandes. Ist das Eingangssignal beispielsweise eine Regeldifferenz, so wird der Wert Null für OUT DB ausgegeben, was bedeutet, dass sich das Eingangssignal innerhalb der aktuellen Totbandbreite befindet. Wenn das Rauschen eine starke Asymmetrie zeigt, d.h., wenn der zeitliche Mittelwert des Eingangssignals nicht genau mittig zwischen dem Maximum und dem Minimum der Amplitude liegt, kann dieses anhand eines zweiten Ausgangssignals OUT abgelesen werden. In diesem Ausführungsbeispiel wird mittels des Signals OUT der zeitliche Mittelwert des verrauschten Signals richtig wiedergegeben. Der Signalverlauf für das Signal OUT ist demnach nicht so glatt, wie der Verlauf des Signals OUT DB, da hier durch die stärkere Berücksichtigung der Signalschwankungen die Filterwirkung etwas reduziert ist. Dennoch sind auch hier die hohen Schwingungsfrequenzen nicht mehr vorhanden.

Fig. 1 zeigt deutlich, dass die Totbandbreite DB über die Zeit kontinuierlich verändert wird. Bereits auf den ersten Blick ist erkennbar, dass die Totbandbreite automatisch vergrößert oder verkleinert wird und sich wie ein Schlauch um die Amplitudenextrema des Eingangssignals legt und somit nur den "echten" Schwankungen des Eingangssignals folgt. "echte" Schwankung bedeutet, dass sich hier der Mittelwert der Maxima und Minima des Eingangssignals ändert.

Um adaptiv Veränderungen an der Totbandbreite vornehmen zu können, muss zunächst eine Zeitkonstante vorgegeben werden, damit Zeitspannen oder Zeitdauern definiert werden können und damit auch Änderungsgeschwindigkeiten des Eingangssignals bestimmbar sind. Eine so genannte Systemzeitkonstante beschreibt somit das dynamische Systemverhalten und hängt von dem betrachteten Gesamtsystem ab. Im Kraftwerksbereich würde eine Temperaturregelstrecke beispielsweise Systemzeitkonstanten zwischen 30 und 60 s aufweisen, während eine Druckregelstrecke Zeitkonstanten zwischen 5 und 10 s umfassen würde. Mittels dieser Zeitkonstanten lässt sich das Signalrauschen von "echten" Signaländerungen unterscheiden. Eine Temperatur kann sich beispielsweise innerhalb einer Zeitdauer von 5 s nicht mehrfach ändern. Wenn der Temperatur-Messwert jedoch ein derartiges Verhalten zeigt, so muss es sich um ein Signalrauschen und nicht um eine echte Signaländerung handeln.

Als Beispiel soll hier als Systemzeitkonstante eine Zeitdauer von 20 s angenommen werden. Sind innerhalb dieser Zeitdauer vielfache Schwingungen des Eingangssignals zu beobachten, so handelt es sich hierbei im Falle eines Temperaturmesswertes um Rauschen, im Falle eines Druckmesswertes jedoch um eine schnelle Signaländerung. Auch Begriffe wie "lange" oder "kurze" Zeitdauern können demnach anhand der Systemzeitkonstanten quantifiziert werden.

Nach dem erfindungsgemäßen Verfahren findet kontinuierlich eine Verkleinerung der Totbandbreite statt, wenn das Eingangssignal IN bereits innerhalb einer zweiten Zeitdauer innerhalb eines Innenbereichs des Totbandes verweilt und dort immer noch ist, wobei die zweite Zeitdauer durch die Systemzeitkonstante bestimmt wird und die Breite des Innenbereichs vorgegeben wird. Bei der zweiten Zeitdauer wird hier eine verhältnismäßig lange Zeitdauer angenommen, die größer als die Systemzeitkonstante ist.

Die Breite des Innenbereichs des Totbandes soll hierbei fallweise festgelegt werden. Als Beispiel sei für den Innenbereich eine Breite von 95% der Gesamtbreite des Totbandes angenommen. Das Eingangssignal wird demzufolge ständig dahingehend beobachtet, ob es innerhalb oder außerhalb eines Totbandes mit einer in diesem Fall um 5% reduzierten Breite liegt. Dieses Totband soll im Folgenden als 95%-Totband bezeichnet werden. Wenn das Eingangssignal nun lange Zeit innerhalb dieses 95%-Totbands verweilt, wird das Totband kontinuierlich verkleinert. Dies ist in Fig. 1 im Bereich D deutlich erkennbar. Über eine Zeitspanne von fast 3 Minuten verlaufen die Oszillationen des Eingangssignals innerhalb der eingezeichneten Totbandgrenzen. Die Totbandbreite verändert sich demnach kontinuierlich. Die Geschwindigkeit der Reduktion der Totbandbreite wird in Abhängigkeit von der Systemzeitkonstante bestimmt. Je langsamer das System, desto langsamer wird auch das Totband verkleinert. Die Geschwindigkeit der Reduktion der Totbandbreite wird außerdem verringert, je kleiner das Totband bereits ist. Die Verkleinerung der Totbandbreite wird gestoppt, wenn das Eingangssignal IN den Innenbereich des Totbandes (hier das 95%-Totband) wieder verlässt und/oder die Totbandbreite einen unteren Grenzwert erreicht (siehe Bereich E in Fig. 1).

In den Bereichen F und G von Fig. 1 ändert sich der Mittelwert des Eingangssignals auffällig um ca. 25%. Innerhalb dieser Bereiche wird die Leistungsfähigkeit des erfindungsgemäßen Algorithmus deutlich. Das Totband folgt dem Eingangssignal und passt sich diesem an. Der Nullpunkt wird entsprechend dem Signalverlauf verschoben, da eine "echte" Signaländerung vorliegt. In diesen Bereichen ist keine wesentliche Anpassung der Totbandbreite nötig, da sich die Rauschleistung nicht ändert.

Nach dem erfindungsgemäßen Verfahren findet eine Vergrößerung der Totbandbreite um einen Faktor statt, wenn das Eingangssignal IN n mal abwechselnd nach oben und nach unten innerhalb einer ersten Zeitdauer die Totbandgrenzen quert, wobei die Zahl n der Durchgänge durch die Totbandgrenzen vorgegeben wird, und die erste Zeitdauer durch die Systemzeitkonstante bestimmt wird. Bei der ersten Zeitdauer handelt es sich um eine verhältnismäßig kurze Zeitdauer. Im Anschluss daran wird die Totbandbreite bei jedem weiteren Mal, bei dem das Eingangssignal in kurzer Zeit durch das Totband hindurchgeht, um einen Faktor erhöht. Die Vergrößerung der Totbandbreite wird gestoppt, wenn das Eingangssignal nicht mehr innerhalb einer kurzen Zeitdauer durch das Totband hindurchgeht oder die Totbandbreite einen oberen Grenzwert erreicht. Die Zählung der Totbanddurchgänge anhand des Parameters n wird auf Null zurückgesetzt, wenn das Eingangssignal wieder innerhalb des Totbands verbleibt.

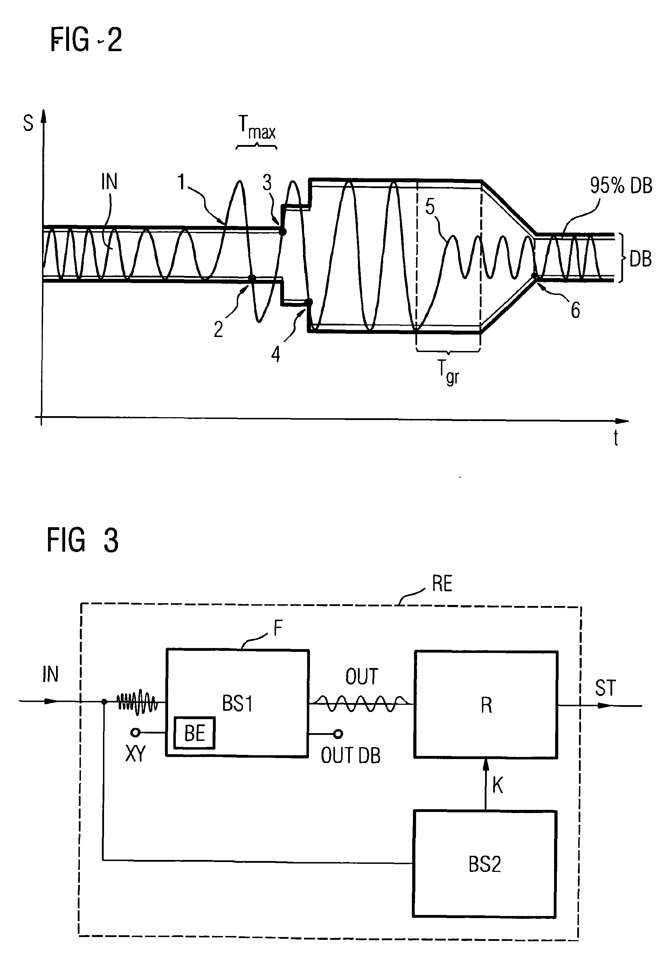

Ein Beispiel für den Fall der Vergrößerung der Totbandbreite ist in Fig. 2 dargestellt. Hier ist ein teil aus dem Bereich C aus Fig. 1 vergrößert worden.

Zu Beginn des Signalverlaufs verbleibt das Eingangssignal IN innerhalb der oberen und unteren Totbandgrenzen, welche hier mit dicken Linien dargestellt sind. Ferner ist jeweils durch eine dünne Line das 95%-Totband gekennzeichnet. An der Stelle 1 tritt nun das Signal IN aus dem Totband aus und an der Stelle 2 erstmals durch das Totband DB durch. Die Anzahl der Totbanddurchgänge, welche eine Vergrößerung der Totbandbreite bewirken sollen, sei hier durch n = 2 festgelegt. Das Signal IN geht nun 2 Mal innerhalb einer kurzen Zeitdauer abwechselnd nach unten und nach oben durch das Totband durch. Die Zeitdauer Tmax wurde vorher als Maximalzeit für einen Durchgang festgelegt. Wie zu erkennen, geht das Signal IN innerhalb einer kürzeren Zeitdauer (T < Tmax) durch die Totbandgrenzen. Damit sind an Punkt 3 beide Bedingungen erfüllt, die eine Vergrößerung der Totbandbreite um einen Faktor zur Folge haben. Es erfolgt ein weiterer Durchgang des Eingangssignals IN durch das Totband, wodurch an Punkt 4 wieder eine Erhöhung der Totbandbreite um einen Faktor stattfindet. Im Folgenden verbleibt das Signal innerhalb der Totbandgrenzen bis es an Punkt 5 eine kleinere Amplitude annimmt. Das Signal verbleibt nun für eine relativ große Zeitspanne Tgr innerhalb des 95%-Totbandes. Nach dieser zweiten, relativ langen Zeitdauer, wird das Totband kontinuierlich verkleinert, bis das Signal das 95%-Totband an Punkt 6 quert. Da das Signal IN nun innerhalb des äußeren mit dicker Linie eingezeichneten Totbandes verbleibt, bleibt die Totbandbreite erhalten.

FIG 3 zeigt eine erfindungsgemäße Vorrichtung F zur Filterung eines Signals IN mit nachgeschalteter Regeleinrichtung R. Ein erster Eingang der Vorrichtung F ist mit dem Eingangssignal IN beaufschlagbar. Weiterhin ist mindestens ein zweiter Eingang XY vorhanden, um weitere Parameter oder Werte aufzunehmen. Über einen solchen Eingang kann der Filtervorrichtung F beispielsweise die Systemzeitkonstante oder die Anzahl n der Durchgänge des Eingangssignals durch die Totbandgrenzen, welche zur Vergrößerung der Totbandbreite notwendig sind, zugeführt werden. Die Filtervorrichtung F umfasst eine Berechnungseinheit BE, mittels welcher die adaptive Filterung des Eingangssignals gemäß der vorliegenden Erfindung durchgeführt wird. Am Ausgang der Filtervorrichtung F ist mindestens ein Signalausgang zur Ausgabe des gefilterten Ausgangssignals OUT vorhanden. Wahlweise ist zumindest ein zweiter Ausgang für ein zweites Ausgangssignal OUT DB vorgesehen. Zumindest einer der dargestellten Ausgänge kann mit einem Regler R verbunden werden. Der Regler R dient zur Regelung mindestens einer Komponente einer technischen Anlage und kann beispielsweise als PI-Regler ausgebildet sein.

In einer Ausführungsvariante kann nun der Regler R durch einen weiteren Baustein BS2 optimiert werden. Durch eine Kombination der erfindungsgemäßen Filtereinrichtung F (oder auch Baustein 1, BS1) mit einem PI-Regler R, welcher gemäß der EP 1 490 735 B1 adaptiert wird, wird eine erhöhte Regelqualität erreicht. Während des Betriebs einer technischen Anlage wird in Baustein 2 BS2 laufend der Istwert der Regelgröße bestimmt und der Verstärkungsfaktor K und eine Nachstellzeit eines PI-Reglers in Abhängigkeit vom zeitlichen Verhalten des Istwerts verändert, solange bis der Istwert innerhalb eines vorgegebenen Toleranzbandes bezüglich des Sollwerts verbleibt. Der optimierte Verstärkungsfaktor K und eine Nachstellzeit werden dem Regler R zugeführt, welcher ein Stellsignal ST ausgibt, welches wiederum die Regelgröße beeinflusst.

Auf diese Weise wird eine Kombination der adaptiven Filterung eines Eingangssignals und der adaptiven Einstellung des Verstärkungsfaktors eines PI-Reglers erreicht, was eine erhöhte Regelqualität zur Folge hat. Die Kombination aus den Bausteinen BS1 und BS2 wird als Regeleinrichtung RE realisiert. Eine Kombination des erfindungsgemäßen adaptiven Filters mit anderen Reglern und Regeleinrichtungen ist ebenfalls denkbar.

**Patentansprüche**

1. Verfahren zur Filterung eines Signals, bei dem ein verrauschtes Eingangssignal (IN) ständig dahingehend überprüft wird, ob es sich innerhalb oder außerhalb eines Totbandes mit einer Totbandbreite (DB) um einen Nullpunkt (NP) befindet, **dadurch gekennzeichnet,** **dass** die Totbandbreite (DB) und der Nullpunkt des Totbandes im laufenden Betrieb in Abhängigkeit des zeitlichen Verhaltens des Eingangssignals (IN) verändert wird, und dass online zumindest ein gefiltertes Ausgangssignal (ausgegeben wird, welches einem Totbandsignal, welches im Wesentlichen einem geglätteten Eingangssignal, entspricht.

2. Verfahren nach Anspruch 1, **dadurch gekennzeichnet,** **dass** eine Systemzeitkonstante vorgegeben wird, anhand derer der zeitliche Verlauf des Eingangssignals quantifiziert wird.

3. Verfahren nach Anspruch 2, **dadurch gekennzeichnet,** **dass** die Totbandbreite (DB) um einen Faktor vergrößert wird, wenn das Eingangssignal (IN) n mal abwechselnd nach oben und nach unten innerhalb einer ersten Zeitdauer durch das Totband hindurchgegangen ist, wobei die Zahl n der Durchgänge vorgegeben wird, und die erste Zeitdauer durch die Systemzeitkonstante bestimmt wird, und **dass** die Vergrößerung der Totbandbreite (DB) gestoppt wird, wenn das Eingangssignal (IN) nicht mehr innerhalb der ersten Zeitdauer durch das Totband hindurchgeht oder die Totbandbreite (DB) einen oberen Grenzwert erreicht.

4. Verfahren nach Anspruch 2, **dadurch gekennzeichnet**, die Totbandbreite (DB) um einen Faktor verkleinert wird, wenn das Eingangssignal (IN) innerhalb einer zweiten Zeitdauer innerhalb eines Innenbereichs des Totbandes verweilt, wobei die zweite Zeitdauer durch die Systemzeitkonstante bestimmt wird und die Breite des Innenbereichs vorgegeben wird, und dass die Verkleinerung der Totbandbreite (DB) gestoppt wird, wenn das Eingangssignal (IN) den Innenbereich des Totbandes wieder verlässt und oder die Totbandbreite (DB) einen unteren Grenzwert erreicht.

5. Verfahren nach einem der Ansprüche 1 bis 4, **dadurch gekennzeichnet,** **dass** die Zählung der Totbanddurchgänge auf Null zurückgesetzt wird, wenn das Eingangssignal eine vorgegebene Zeitdauer im Totband verbleibt.

**6.** Vorrichtung (F) zur Filterung eines Signals aufweisend

- mindestens einen Signaleingang zur Aufnahme eines verrauschen Eingangssignals (IN),
- weitere Eingänge (XY) mittels welchen die Vorrichtung (F) mit Parametern und/oder Messwerten beaufschlagbar ist,
- eine Berechnungseinheit (BE), in welcher das Eingangssignal (IN) mittels eines Verfahrens nach einem der Ansprüche 1 bis 5 verarbeitet wird,
- mindestens einen Signalausgang zur Ausgabe eines gefilterten Ausgangssignals (OUT)
- weitere Ausgänge zur Ausgabe weiterer Ausgangssignale (OUT DB)

**7.** Regeleinrichtung (RE) für einen Prozess, in welchem eine Regelgröße kontinuierlich als Istwert erfasst wird und ein Sollwert für diese Regelgröße vorgegeben wird und die Differenz aus Ist- und Sollwert einem Regler (R) zugeführt wird, welcher wiederum über ein Stellsignal (ST) die Regelgröße beeinflusst,
**dadurch gekennzeichnet,**
**dass** dem Eingang des Reglers (R) eine Vorrichtung zur Filterung des Eingangssignals gemäß Anspruch 6 vorgeschaltet ist.

**8.** Regeleinrichtung (RE) nach Anspruch 7, **dadurch gekennzeichnet,**
**dass** als Regler ein PI-Regler verwendet wird, welcher als Reglerparameter einen Verstärkungsfaktor und eine Nachstellzeit umfasst, welche adaptiv einstellbar sind.

**9.** Computerprogramm mit durch einen Computer ausführbaren Programmcodeanweisungen zur Implementierung des Verfahrens nach einem der Ansprüche 1 bis 5, wenn das Computerprogramm auf einem Computer ausgeführt wird.

**10.** Computerprogrammprodukt, insbesondere Datenträger oder Speichermedium, mit einem durch einen Computer ausführbaren Computerprogramm gemäß Anspruch 9.

# FIG 1

EP 2 474 873 A1

| Fuseau horaire: CET dur.: 00:20:00 |

S
A        B      C          D         E        F              G
IN       IN         UL DB ACT         OUT
                                              OUT DB
LL DB ACT                    DB

100 %
75 %
50 %
25 %
0 %

t

| 14:41:00 | 14:42:00 | 14:43:00 | 14:44:00 | 14:45:00 | 14:46:00 | 14:47:00 | 14:48:00 | 14:49:00 | 14:50:00 | 14:51:00 | 14:52:00 | 14:53:00 | 14:54:00 | 14:55:00 | 14:56:00 | 14:57:00 | 14:58:00 | 14:59:58 |
| 10/03/11 | 10/03/11 | 10/03/11 | 10/03/11 | 10/03/11 | 10/03/11 | 10/03/11 | 10/03/11 | 10/03/11 | 10/03/11 | 10/03/11 | 10/03/11 | 10/03/11 | 10/03/11 | 10/03/11 | 10/03/11 | 10/03/11 | 10/03/11 | 10/03/11 |

| IDENT SIGNAL | DÉNOMINATION | LIMITE INF | LIMITE SUP | CURSEUR 1 | CURSEUR 2 | UNITÉ | CENTER |
|---|---|---|---|---|---|---|---|
| Test Opti I I Input | Input signal | 40,0000 | 60,0000 | | | | 51,9025 |
| Test Opti I I UL DB ACT | Actual upper limit DB | 40,0000 | 60,0000 | | | | 52,0926 |
| Test Opti I I LL DB ACT | Actual lower limit DB | 40,0000 | 60,0000 | | | | 47,9785 |
| Test Opti I I OUT | Filtered signal | 40,0000 | 60,0000 | | | | 50,4907 |
| Test Opti I I DB | Actual deep band | 0,0000 | 10,0000 | | | | 2,0571 |
| Test Opti I I OUT DB | Filtered signal w/o annulment | 40,0000 | 60,0000 | | | | 50,0355 |

FIG -2

FIG 3

Europäisches Patentamt

European Patent Office

Office européen des brevets

**EUROPÄISCHER RECHERCHENBERICHT**

**Nummer der Anmeldung**

EP 11 15 0659

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2006/090679 A1 (MERCX JOSEF [CH]) 4. Mai 2006 (2006-05-04) * Absatz [0036] - Absatz [0038] * ----- | 1,9,10 | INV. G05B11/42 G05B13/02 |
| A | WO 87/05411 A1 (MESSERSCHMITT BOELKOW BLOHM [DE]) 11. September 1987 (1987-09-11) * Seite 13, Zeile 6 - Zeile 23 * ----- | 1 | |

RECHERCHIERTE SACHGEBIETE (IPC)

G05B

Der vorliegende Recherchenbericht wurde für alle Patentansprüche erstellt

| Recherchenort | Abschlußdatum der Recherche | Prüfer |
|---|---|---|
| Den Haag | 15. Juni 2011 | Kelperis, K |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 15 0659

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-06-2011

| Im Recherchenbericht angeführtes Patentdokument | Datum der Veröffentlichung | Mitglied(er) der Patentfamilie | | Datum der Veröffentlichung |
|---|---|---|---|---|
| US 2006090679    A1 | 04-05-2006 | AT | 504784 T | 15-04-2011 |
| | | EP | 1655540 A1 | 10-05-2006 |
| | | JP | 4247499 B2 | 02-04-2009 |
| | | JP | 2006132925 A | 25-05-2006 |
| WO 8705411    A1 | 11-09-1987 | DE | 3606640 A1 | 15-10-1987 |
| | | EP | 0258333 A1 | 09-03-1988 |
| | | JP | 2886532 B2 | 26-04-1999 |
| | | JP | 63502700 T | 06-10-1988 |
| | | US | 4914564 A | 03-04-1990 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   EP 1490735 B1

*   EP 1490735 A